# EUROPÄISCHE PATENTSCHRIFT

(11) **EP 1 025 469 B1**
(45) Veröffentlichungstag und Bekanntmachung des Hinweises auf die Patenterteilung: **27.10.2004**
(21) Anmeldenummer: 98947272.5
(22) Anmeldetag: 22.10.1998
(51) Int. Cl.: G05B 19/4155

(54) **VERFAHREN ZUR STEUERUNG EINER CNC-WERKZEUGMASCHINE**
METHOD FOR CONTROLLING A CNC MACHINE TOOL
PROCEDE DE COMMANDE D'UNE MACHINE-OUTIL A COMMANDE NUMERIQUE PAR CALCULATEUR

(30) Priorität: 31.10.1997 CH 253197
(43) Veröffentlichungstag der Anmeldung: 09.08.2000
(73) Patentinhaber: REISHAUER AG., CH-8304 Wallisellen (CH)
(72) Erfinder: GUENTHER, Andreas, D-79713 Bad Säckingen (DE); AUBERT, Ralph, CH-8127 Forch (CH)
(74) Vertreter: Clerc, Natalia
(86) Internationale Anmeldenummer: PCT/CH1998/000452
(87) Internationale Veröffentlichungsnummer: WO 1999/023542

(56) Entgegenhaltungen:
- DE-A- 4 330 220
- GB-A- 2 291 983

## Beschreibung

Die vorliegende Erfindung betrifft ein Verfahren zur Steuerung einer CNC-Werkzeugmaschine, welche zyklisch wiederkehrende Abläufe aufweist, gemäss Oberbegriff des Patentanspruches 1 sowie ein Steuerungssystem für eine CNC-Maschine gemäss Oberbegriff des Patentanspruches 6.

Unter Steuerungssystemen versteht man die Kombination von Mechanik, Elektronik und Informatik, welche in der Automatisierungstechnik ermöglicht, einen Arbeitsprozess nach vorgegebenen Programmen selbständig ablaufen zu lassen.

Der heutige Stand derartiger Steuerungssysteme ist beispielsweise im Lehrbuch von Manfred Weck, "Werkzeugmaschinen, Fertigungssysteme", Bd. 3.1, VDI Verlag, Düsseldorf, 1995, sowie in Dubbel, "Taschenbuch für den Maschinenbau", 17. Auflage, Springer Verlag, Berlin 1995, beschrieben.

Im allgemeinen wird das Steuerungssystem heute in drei Ebenen oder Einheiten unterteilt:
- eine Dateneingabe- und Visualisierungseinheit, auch Mensch-Maschine-Interface (MMI) genannt, welche die Maschinen- und Betriebsdatenerfassung, die Wahl der auszuführenden Maschinenbetriebsart, die Auftragsverwaltung und die Prozessvisualisierung ermöglicht beziehungsweise zur Verfügung stellt,
- eine als zentrale Steuereinheit wirkende Anpass-Steuereinheit, auch SPS oder PLC (programmable logic controller) genannt, mit einem Steuerungsprogramm, welches gemäss dem Stand der Technik die Gesamtheit aller Anweisungen und Vereinbarungen für die Signalverarbeitung enthält,
- eine NC-Steuereinheit (NC = Numeric control), in welcher Funktionsabläufe in NC-Steuerprogrammen abgespeichert sind. Diese NC-Steuerprogramme enthalten geometrische Daten betreffend den Weginformationen, technologische Daten, wie Schnittgeschwindigkeit, Vorschub, Spindeldrehzahl, sowie Schaltbefehle, beispielsweise Werkzeugwechsel, Teilebeschickung oder -entnahme. Sich wiederholende Bewegungsabläufe sind nach Massgabe der Wiederholungen mehrfach im NC-Programm abgelegt.

Ueber die MMI-Einheit eingegebene Daten zur Definierung des herzustellenden Werkstückes werden in der NC-Steuereinheit decodiert und nach geometrischen, technologischen Daten und Schaltbefehlen getrennt weiterverarbeitet. Schaltbefehle werden an die SPS-Steuereinheit weitergegeben, wo sie mit Rückmeldungen der Werkzeugmaschine verknüpft und nach Massgabe des Schritt für Schritt abgearbeiteten Steuerprogramms in Steuerbefehle umgesetzt werden, welche das gegliederte NC-Programm synchronisieren. Geometrische und technologische Daten erzeugen nach Aufruf durch die NC-Steuereinheit entsprechende Achsbewegungsbefehle für die Maschine. NC- und SPS-Einheit melden zwecks Prozessvisualisierung den aktuellen Maschinenstatus an die MMI-Einheit.

Eine wichtige Forderung an derartige Steuerungssysteme ist, dass sie möglichst flexibel sein müssen, so dass Aenderungen in der Mechanik der CNC-Maschine oder in der Eingabemaske des MMI nicht einer vollständigen Neuprogrammierung der Maschine bedürfen.

Um eine Erweiterung der Mechanik der Werkzeugmaschine zu ermöglichen, verfügt deshalb das in EP-A-0'553'621 offenbarte Steuerungssystem von vornherein über mindestens zwei SPS-Module, wobei das erste SPS-Modul die Maschinensteuerung übernimmt und das zweite SPS-Modul als Reserve vorhanden ist. Im Falle einer Maschinenerweiterung muss lediglich das zweite SPS-Modul mit den neuen Maschinenfunktionen für die weiteren Maschinenbewegungen versehen werden, welche durch das Steuerungssystem automatisch mit dem ersten SPS-Modul gekoppelt werden. Eine Neuprogrammierung oder ein Ersetzen des bereits vorhandenen, programmierten ersten SPS-Moduls ist nicht notwendig.

In EP-A-0'642'066 wird die Aufgabe gestellt, die Dialogführung zu flexibilisieren, damit sich das Mensch-Maschine-Interface (MMI) geänderten Bedürfnissen des Anwenders auf einfache Art und Weise anpassen lässt. Ein dialogorientiertes Programmiersystem zur Erzeugung von Steuerungsprogrammen verfügt über eine Daten-Vorwärts-Rückwärts-Zugriffs-Einheit, welche jedes in einem Programmiersystem erstellte Programm in die Teilsteuerdaten "Maschinensteuerdaten" und "Dialogsteuerdaten" auftrennt, welche mit Verknüpfungsschlüssel versehen werden. Die Maschinensteuerdaten werden in einen Maschinenprogrammspeicher und die Dialogsteuerdaten in einen Hintergrundspeicher abgelegt. Ueber die Verknüpfungsschlüssel lassen sie sich wieder zu einem Steuerprogramm zusammensetzen und im Hintergrundspeicher ablegen.

Die Steuerungssysteme von CNC-Maschinen gemäss dem Stand der Technik sind im allgemeinen darauf ausgerichtet, möglichst viele und verschiedenartige Maschinenbewegungen steuern zu können, so dass sie versuchen, die eigentlich starre zentrale Steuereinheit mit ihren SPS-Modulen flexibler zu gestalten. Dies führt jedoch zu komplexen Steuerungssystemen, welche nach wie vor nur von qualifizierten Spezialisten geändert werden können.

Es gibt jedoch auch Werkzeugmaschinen, welche eine ausgeprägte Zyklencharakteristik aufweisen. Ein Beispiel einer derartigen Werkzeugmaschine ist eine Zahnradschleifmaschine. Die Bewegungen, welche eine Maschine mit Zyklencharakteristik auszuführen hat, wiederholen sich zyklisch. Zudem werden für alle Werkstücke dieselben Werkstückformen verwendet. Die Unterschiede im Steuerungssystem, welche zu unterschiedlich geformten Werkstücken führen, liegen nur in den Betriebsparametern oder Steuerdaten, nicht in den grundsätzlichen Bewegungsabläufen, welche durch einzelne Bearbeitungsfunktionen definiert sind. Zudem sind die Folgen und Hierarchien der einzelnen Bearbeitungsfunktionen eindeutig festgelegt und verändern sich nicht. Die Bearbeitungsfunktionen an und für sich sowie ihre Hierarchie untereinander bleiben auch bei einer Erweiterung oder Aenderung der Maschine stets dieselben, so dass die SPS-Module der zentralen Steuereinheit demzufolge stets dieselben Steuerbefehle an die CNC-Ebene übermitteln müssen.

Die vorliegende Erfindung hat sich zur Aufgabe gestellt, ein Verfahren zur Steuerung einer derartigen CNC-Maschine mit ausgeprägter Zyklencharakteristik, insbesondere einer Zahnradschleifmaschinen, sowie ein Steuerungssystem zu schaffen, welche eine einfache Aenderung von Programmen und dadurch eine hohe Flexibilisierung ermöglichen.

Diese Aufgabe löst ein Verfahren mit den Merkmalen des Patentanspruches 1 sowie ein Steuerungssystem mit den Merkmalen des Patentanspruches 6.

Der Erfindung liegt die Erkenntnis zugrunde, dass sich bei Maschinen mit zyklisch wiederkehrenden Abläufen die Funktionssteuerung der Maschine innerhalb des Ablaufes nicht ändert und sich somit das Master-Slave-Prinzip anwenden lässt. Dadurch sind die Hierarchien zwischen zentraler Steuereinheit und NC-Steuereinheit eindeutiger festlegbar als bei den bekannten CNC-Steuerungssystemen.

Erfindungsgemäss besteht das NC-Programm aus mehreren Teilprogrammen oder Funktionsmodulen, welche einzelne Bearbeitungsfunktionen beinhalten und welche jeweils mit einem automatisch ausgeführten Haltbefehl versehen sind. Die einzelnen Funktionsmodule lassen sich mittels Steuercodes der Maschinenkontroll-Einheit aufrufen, wobei unabhängig von ihrer hierarchischen Position im NC-Programm von einem Funktionsmodul ins nächste gewechselt werden kann. Die Steuercodes werden von der MMI-Einheit kontextsensitiv vorgegeben.

Erfindungsgemäss werden über die MMI-Einheit eingegebene Daten in Funktionsdaten für die Bearbeitungsfunktionen und in Steuerdaten für die Wahl der Funktionsmodule getrennt, wobei erstere an die NC-Steuereinheit transferiert werden, wo sie nach Massgabe des NC-Programms in diesem verwendet werden. Die Steuerdaten werden an die Maschinenkontroll-Einheit, wo sie in Form von Steuercodes oder Zielcodes in einem zentralen Steuerprogramm zur Selektion der Funktionsmodule des NC-Programms dienen.

Diese Maschinenkontroll-Einheit ersetzt die bekannte SPS-Steuereinheit, da sie alle Aufgaben der bekannten SPS-Steuereinheit übernimmt. Sie ist zudem in der Lage festzulegen, welches Funktionsmodul als nächstes durchlaufen werden soll und übernimmt so in einem stärkeren Masse die effektive Steuerung der CNC-Maschine. Dabei legt sie den zu durchlaufenden Weg innerhalb des Programmbaumes vom zuletzt aktivierten Funktionsmodul zum neuen Zielpunkt des NC-Programms fest, wobei das NC-Programm in beliebigen Richtungen durchfahren werden kann. Somit findet nicht nur eine hierarchische Abarbeitung statt, sondern ineinander verschachtelte Zyklen, ein Wechsel auf andere gleichgestellte oder ein Zurückspringen auf hierarchisch höhere Ebenen sind dank der Maschinenkontroll-Einheit möglich, welche mittels im NC-Programm enthaltene Uebergangsfunktionen die physische Bereitstellung der Maschine zur Ausführung der nächsten Bearbeitungsfunktion gewährleistet.

Da sich die einzelnen Funktionsmodule mehrmals während eines einzigen Ablaufes des NC-Programms aufrufen lassen, muss jede Bearbeitungsfunktion lediglich einmal im NC-Programm aufgeführt sein. Das NC-Programm gemäss der Erfindung ist somit einfach aufgebaut und benötigt nicht unnötigerweise Speicherplatz.

Gemäss der Erfindung sind die Funktionsmodule oder Menüpunkte eines NC-Programms zu einem Programmbaum zusammengefasst. Welcher Ast des Programmbaumes durchlaufen wird, bestimmt eine Maschinenkontroll-Einheit. Da ihr die Verknüpfungsstruktur im Programmbaume bekannt ist, ist sie zudem in der Lage, den Weg von einem Ast zum nächsten zu bestimmen. Im allgemeinen genügt ein einziges NC-Programm, die Integration von mehreren NC-Programmen in einer einzigen NC-Steuereinheit ist jedoch möglich.

Dank dem erfindungsgemässen Zusammenwirken von MMI-, Maschinenkontroll- und NC-Einheit lässt sich ein bestehendes Steuerungssystem auf einfache Art und Weise ändern oder ergänzen. Sollen neue Bearbeitungsfunktionen eingeführt werden, genügt die Integration eines neuen Funktionsmoduls im Programmbaum sowie die Vergabe eines neuen Steuercodes in der MMI-Einheit, welche an die Maschinenkontroll-Einheit übermittelt wird. Sollen bestehende Bearbeitungsfunktionen mit neuen Steuerdaten versehen werden, so genügt ihre Ablage in der MMI-Einheit. Der Anwender kann somit Ergänzungen und Aenderungen durchführen, ohne das zentrale Steuerprogramm der Maschinenkontroll-Einheit ändern zu müssen. Beispiele hierfür sind, eine Aenderung der für die Ausführung der Bearbeitungsvorgänge notwendigen Daten, Hinzufügen von neuen Daten, beispielsweise für ein neues Bearbeitungswerkzeug oder für ein Zahnrad mit neuen Abmessungen oder das Ausführen neuer Achsbewegungen. Beim Aendern oder Ergänzen der Steuerung müssen somit nicht die ganzen Zusammenhänge erkannt werden, da die Baumstruktur des NC-Programms Fehlbewegungen der Werkzeugmaschine vermeidet. Die Verwendung von zwei beliebig kopierbaren Ur-Files, eines für die Steuerdaten und ein anderes für die Funktionsdaten, ermöglichen ein schnelles und zuverlässiges Hinzufügen von neuen Steuerungselementen. Vorallem im Bereich der MMI-Einheit lassen sich Aenderung ohne Compilierung durch reine ASCII-Editiervorgänge durchführen.

Zudem lässt sich die MMI-Einheit, insbesondere eine Bedienund Selektionsoberfläche, flexibel gestalten und auf einfache Art und Weise ändern, ohne eine Aenderung der Maschinenkontroll-Einheit nach sich zu ziehen.

Vorteilhaft ist zudem, dass durch die erfindungsgemässe Ansteuerung des NC-Programms die Gefahr, dass Programmaufrufe zu unerwünschten Unterbrechungen des Werkstück-Bearbeitungsvorganges führen, beseitigt ist.

In den beiliegenden Zeichnungen ist das erfindungsgemässe Steuerungssystem schematisch dargestellt und in der nachfolgenden Beschreibung gemeinsam mit dem erfindungsgemässen Verfahren detaillierter erläutert. Es zeigen
- Figur 1: eine schematische Darstellung der Einheiten des Steuerungssystems mit einer vereinfachten Angabe des Datenflusses;
- Figur 2: eine schematische Darstellung der Datenblöcke in der MMI-Einheit;
- Figur 3: eine schematische Darstellung eines Programmbaumes und
- Figur 4: eine schematische Darstellung eines Funktionsmoduls.

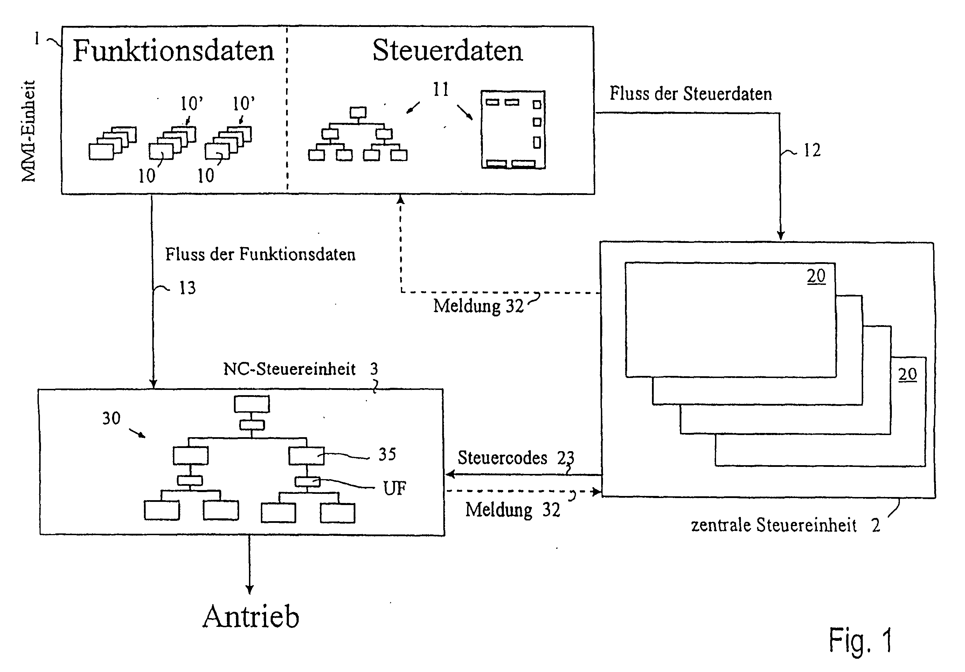

In Figur 1 ist das erfindungsgemässe Steuerungssystem für eine Zahnradschleifmaschine vereinfacht dargestellt, wobei nicht erfindungswesentliche Hilfsfunktionssteuerungen und Kontrollmechanismen und -abfragen nicht eingezeichnet sind. Das Steuerungssystem besteht im wesentlichen aus drei Einheiten: einer Dateneingabe- und Visualisierungseinheit, auch MMI-Einheit 1 genannt, einer zentralen Steuereinheit oder Maschinenkontroll-Einheit 2 und einer NC-Steuereinheit 3.

Die MMI-Einheit 1 stellt dem Benützer eine Bedien- und Selektionsoberfläche zur Verfügung, um Betriebsparameter (Steuerdaten 10) und Maschinenbetriebsart (Funktionsdaten 11) auszuwählen oder einzugeben. Diese Bedien- und Selektionsoberfläche kann sowohl in Form einer Matrix (Matrix-Select-Guide) gestaltet sein oder, wie in Figur 1 dargestellt, einem Baum (Tree-Select-Guide) entsprechen. Dieser Baum kann, muss jedoch nicht, mindestens annähernd der NC-Programmstruktur entsprechen. Bevorzugterweise werden in derselben MMI-Einheit sowohl die Matrix wie auch der Baum angeboten, wobei der Benützer in jeder Stufe der Bedien- und Selektionsoberfläche von einer Variante in die andere wechseln kann.

Die MMI-Einheit 1 enthält mindestens zwei Ur-Files, wobei ein erstes Ur-File alle für die komplette NC-Funktionalität erforderlichen verfahrenscharakteristischen Daten und ein zweites Ur-File alle für die Dateneingabe notwendigen Daten enthält. Von beiden Ur-Files lassen sich beliebig viele Kopien erzeugen und jedes File lässt sich für sich editieren. Mit dem ersten Ur-File sind die für die spezifische Bearbeitung eines Werkstückes notwendigen Funktionsdaten 10 verknüpft, mit dem zweiten Ur-File die die Bearbeitungsfunktionen definierende Steuerdaten 11.

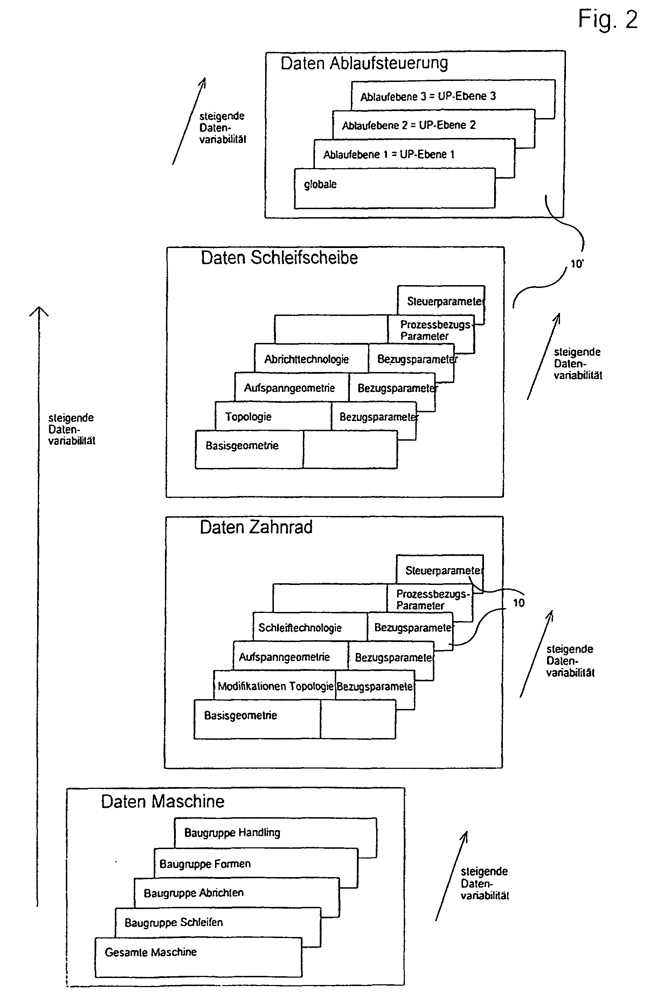

Die Funktionsdaten 10 sind bevorzugterweise in Datenblöcke 10' zusammengefasst, wie dies in Figur 1 schematisch dargestellt ist. Jeder Datenblock 10' umfasst einen Teilbereich der CNC-Maschine, beispielsweise sind, wie in Figur 2 dargestellt, Datenblöcke für die Maschinendaten, für zu verwendende Werkzeuge wie Abrichtwerkzeuge oder Schleifscheiben und für herzustellende Werkstücke, wie Zahnräder, vorhanden. Der Benützer wählt aus bestehenden, bereits gespeicherten Datenblöcken aus oder generiert Datenblöcke mit neuen Angaben, beispielsweise für ein zusätzliches Zahnrad. Neu eingegebene Daten werden einer Plausibilitätsprüfung unterzogen.

Die Steuerdaten 11 dienen zur Ausführung verschiedener Maschinenbetriebsarten, wie Profilieren, Schleifen und Ueberdrehen, wobei im allgemeinen zwischen einer Betriebsart zum Einrichten der Maschine, einem manuellen Betrieb, einem Halbautomatik- und einem Automatikbetrieb gewählt werden kann. Die Steuerdaten 11 bilden direkt selber die für die Steuerung des NC-Programmbaumes notwendigen Steuercodes oder sie sind eindeutig in diese überführbar.

Die Maschinenkontroll-Einheit 2 gemäss Figur 1 besteht aus mindestens einem, bevorzugterweise mehreren Steuermodulen 20, welche in ihrer Funktionsaktivierung vorzugsweise hierarchisch aufgebaut sind. Beispielsweise steuert ein oberes Steuermodul Anwenderabläufe, ein nächstunteres Steuermodul betrifft die Peripherie-Zustimmung und ein nächstes ist für die Treiber zuständig.

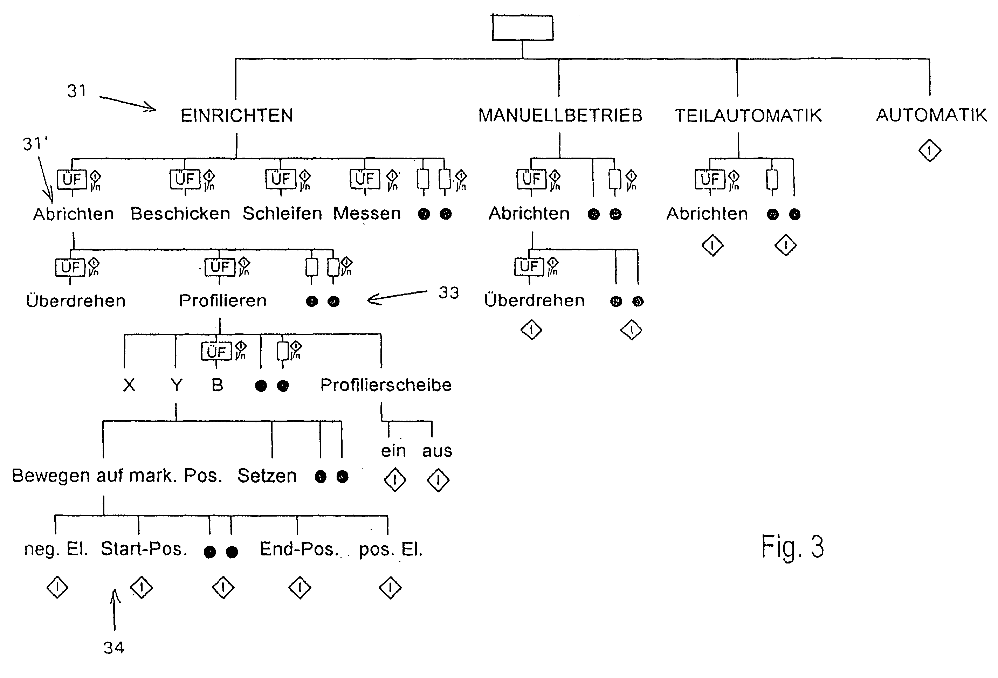

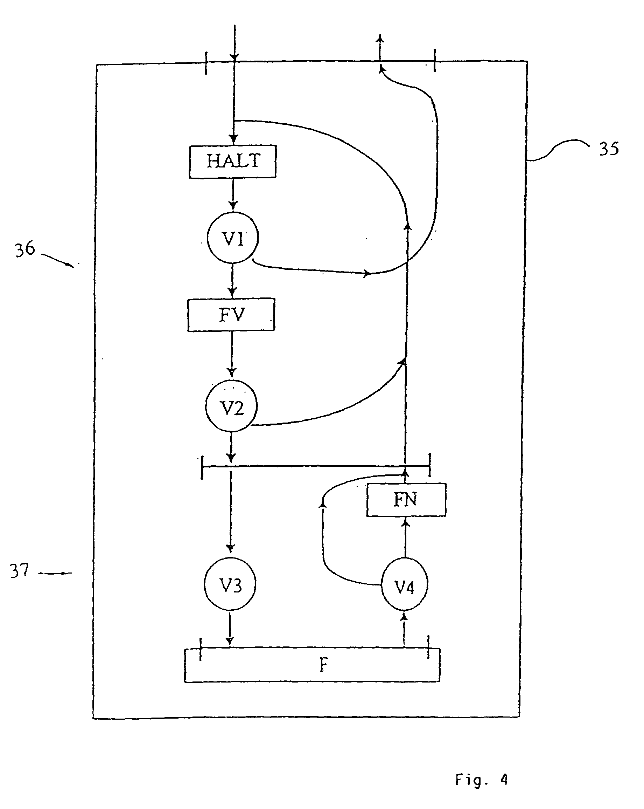

In der NC-Einheit 3 ist mindestens ein NC-Steuerprogramm 30 zur Generierung der Maschinenbewegungen gespeichert. Das NC-Steuerprogramm 30 ist vorzugsweise in der Form eines NC-Programmes gestaltet. Es kann jedoch durch irgend ein nichtinterpretatives Programm der NC-Einheit gebildet werden. Das NC-Steuerprogramm 30 weist eine Baumstruktur auf, welche weiter unten anhand der Figuren 3 und 4 näher erläutert wird.

Nachdem der Anwender in der MMI-Einheit 1 sowohl die Funktionsdaten 10 wie auch die Steuerdaten 11 für einen spezifischen Bearbeitungsvorgang eingegeben bzw. gewählt hat, werden die gewählten Funktionsdaten 10 direkt an die NC-Steuereinheit 3 geleitet (13) und die Steuerdaten 11 an die Maschinenkontroll-Einheit 2 übergeben (12).

Die Steuerdaten 11 aktivieren in der Maschinenkontroll-Einheit 2 ein zentrales Steuerprogramm, welches schrittweise und in zyklischer Folge Steuercodes an die NC-Steuereinheit 2 weitergibt (23). Die Steuercodes aktivieren über Codeadressen einzelne, mit dem Antrieb der CNC-Maschine wirkverbundene Funktionsmodule der NC-Einheit 3, welche die Antriebe der CNC-Maschine aktivieren.
Die NC-Steuereinheit 3 überprüft zudem vor, während und nach dem Bearbeitungsprozess mit hier nicht dargestellten Mitteln den Maschinenstatus und leitet diesen direkt oder über die Maschinenkontroll-Einheit 2 an die MMI-Einheit 1 weiter (32).

In Figur 3 ist ein erfindungsgemässes NC-Programm in Form eines Programmbaumes dargestellt. Die oberste Verästelung des Baumes unterscheidet die grundsätzlichen Betriebsarten 31 der Zahnradschleifmaschine, nämlich Einrichten, manueller, teilautomatischer und automatischer Betrieb. Diese grundsätzlichen Betriebsarten lassen sich auch in getrennte NC-Programme aufteilen. Jede Betriebsart verästelt sich in weitere Ebenen, welche bestimmte Bearbeitungsarten 31', wie Abrichten, Beschicken, Schleifen oder Messen betreffen. Mindestens ein Teil der Bearbeitungsarten 31' verästelt sich wiederum in einzelne Bearbeitungsunterarten 33 wie Ueberdrehen oder Profilieren, welche über eine oder mehrere weitere Verästelungen in den effektiven Maschinensteuerbefehlen 34 enden. In den Verästelungen sind mindestens teilweise Uebergangsfunktionsmodule UF vorhanden. Derartige Uebergangsfunktionen sind beispielweise Verfahrensbewegungen, trigonometrische Funktionen, Algorithmen, Dialoge oder Schaltfunktionen.

Jede Ebene des Programmbaumes 30 ist im wesentlichen identisch aufgebaut und besteht aus einem oder mehreren Teilprogrammen oder Funktionsmodulen 35. Ein derartiges Funktionsmodul 35 ist in Figur 4 dargestellt. Es besteht aus einem Vorbereitungsteil 36 und einem nachfolgenden Ausführungsteil 37. Am Anfang des Vorbereitungsteils 36 steht ein Haltbefehl H. Anschliessend folgt ein Rückverteiler V1, welcher wahlweise zur nächstoberen Ebene führt oder hierarchisch zur Funktionsvorbereitung FV überleitet. Anschliessend folgt ein Funktionsrückverteiler V2, welcher im Falle einer Fehlermeldung E1 in die nächstobere Ebene führt. Andernfalls wird innerhalb des Funktionsmoduls weitergeleitet in den Ausführungsteil 37, wo über einen Funktionsverteiler V3 eine Bearbeitungsfunktion F aufgerufen wird, zum Beispiel eine Achsbewegung von einem Punkt X zu einem Punkt Y. Nach Ausführung dieser Funktion erfolgt im Falle einer Fehlermeldung E2 eine Rückmeldung über einen Funktionsrückverteiler V4 zur oberen Ebene. Andernfalls löst der Funktionsrückverteiler V4 eine Nachbearbeitungsfunktion FN auf, zum Beispiel ein Anheben eines Bearbeitungswerkzeuges vom Werkstück. Die Nachbearbeitungsfunktion FN kehrt nach Beendigung zum Haltbefehl H zurück.

Jedes Funktionsmodul 35 beziehungsweise dessen Haltbefehl H ist mit einer Identifikationsnummer, auch Zielcode genannt, versehen. Dieser Zielcode ist vorzugsweise so gewählt, dass jede Ebene über einen Zahlensatz verfügt und Zahlensätze nächsthöherer Ebenen diesem Zahlensatz vorangestellt werden. Beispielsweise ist die in Figur 3 dargestellte Funktion "Profilieren" mit dem Zielcode "112" versehen. Dieser Zielcode wird nach Massgabe der Benützereingabe in der MMI-Einheit 1 über die Maschinenkontroll-Einheit 2 über einen Steuercode selektiert, der Haltbefehl H deaktiviert und das entsprechende Funktionsmodul 35 wird ausgeführt. Zielcode und Steuercode sind vorzugsweise identisch.

Das Starten eines derartigen Funktionsmodul 35 mittels eines Steuercodes ist für den Fachmann nachvollziehbar und wird deshalb im folgenden nicht im Detail beschrieben. Spezieller hingegen ist das Wechseln von einem Funktionsmodul 35 in ein anderes weiteres Modul. Dieses erfolgt nach Wahl des Zielcodes über die MMI-Einheit mittels einer in der Maschinenkontroll-Einheit integrierten, als Schrittkette organisierten State-Machine, also ein NC-dialogfähiger Automat, welcher die Verknüpfungssstruktur des Programmbaumes kennt. Die Maschinenkontroll-Einheit entscheidet somit aufgrund der Baumstruktur, welche Uebergangsfunktionen UF notwendigerweise ausgeführt werden müssen, um die Werkzeugmaschine physisch von der aktuellen Position im Programmbaum bis zur neuen Startposition für das neu auszuführende Funktionsmodul überzuführen. Die Uebergangsfunktionen UF gewährleisten somit, dass die Bearbeitungswerkzeuge an die gewünschten Positionen gefahren und die. Maschine zur Ausführung der nächsten Betriebsfunktion bereitgestellt wird oder dass die für die nächste Aktion notwendigen Dialoge oder Berechnungen durchgeführt und die notwendigen Daten bereitgestellt werden.

Die Uebergangsfunktionen können, wie in den Figuren dargestellt, zwischen den einzelnen Funktionsmodulen liegen. In anderen Varianten sind die Uebergangsfunktionen in den Funktionsmodulen integriert, beispielsweise indem sie in der Funktionsvorbereitung FV integriert sind. Ebenso ist es möglich, dass in einem Funktionsmodul mehrere Funktionsvorbereitungen FV sowie mehrere Nachbearbeitungsfunktionen FN aufweist. Beispielsweise ist eine Funktionsvorbereitung FV vor dem Halt-Befehl und eine anschliessend nach dem Halt-Befehl angeordnet. In gleicher Weise wird eine erste Nachbearbeitungsfunktion durchlaufen, falls das Modul nicht verlassen wird und eine zweite Nachbearbeitungsfunktion, falls das Modul verlassen wird.

## Patentansprüche

1. Verfahren zur Steuerung einer CNC-Werkzeugmaschine, welche zyklisch wiederkehrende Abläufe aufweist, insbesondere einer Zahnradschleifmaschine, mit einer Dateneingabe- und Visualisierungseinheit (1), einer Maschinenkontroll-Einheit (2) und einer NC-Steuereinheit (3) mit mindestens einem gespeicherten NC-Steuerprogramm zur Generierung von Bewegungsbefehlen für die CNC-Maschine,
wobei in der Dateneingabe- und Visualisierungseinheit (1) gewählte, Maschinenbetriebsarten definierende Steuerdaten (11) an die Maschinenkontroll-Einheit (2) weitergeleitet werden, und
wobei in die Dateneingabe- und Visualisierungseinheit (1) eingegebene oder in dieser gewählte, für die Bearbeitung eines spezifischen Werkstückes notwendige Funktionsdaten (10) von der Dateneingabe- und Visualisierungseinheit (1) an die NC-Steuereinheit (3) geleitet werden,
**dadurch gekennzeichnet,**
**dass** die Maschinenkontroll-Einheit nach Massgabe von gewählten Steuerdaten (11) mittels Steuercodes Teilprogramme darstellende Funktionsmodule (35) des NC-Steuerprogramms (30) aufruft und unabhängig von ihrer hierarchischen Lage im NC-Steuerprogramm von einem Funktionsmodul (35) zum nächsten führt,
wobei mittels der Steuercodes in jedem Funktionsmodul (35) vorhandene Haltbefehle (H) deaktiviert werden und
wobei die Maschinenkontroll-Einheit beim Wechsel von einem Funktionsmodul (35) zum nächsten mindestens eine Uebergangsfunktion (UF) zur physischen Bereitstellung und/oder Datenbereitstellung der CNC-Werkzeugmaschine berücksichtigt.

2. Verfahren nach Anspruch 1, **dadurch gekennzeichnet, dass** der zu Beginn eines jeden Funktionsmoduls (35) vorhandene Haltbefehl (H) nach Abarbeitung des Funktionsmoduls (35) angefahren wird.

3. Verfahren nach Anspruch 2, **dadurch gekennzeichnet, dass** nach Abarbeitung des Funktionsmoduls vor dem Anfahren des Haltbefehles (H) eine Nachbearbeitungsfunktion (FN) ausgeführt wird.

4. Verfahren nach Anspruch 1, **dadurch gekennzeichnet, dass** in einem aktivierten Funktionsmodul (35) mindestens ein weiteres, darin verschachteltes Funktionsmodul aufgerufen wird.

5. Verfahren nach Anspruch 1, **dadurch gekennzeichnet, dass** die Funktionsdaten (10) durch Kopieren eines ersten Urfiles und die Steuerdaten (11) durch Kopieren eines zweiten Urfiles in der Dateneingabe- und Visualisierungseinheit (1) gespeichert werden.

6. Steuerungssystem für eine CNC-Werkzeugmaschine, welche zyklisch wiederkehrende Abläufe aufweist, insbesondere für eine Zahnradschleifmaschine,
mit einer Dateneingabe- und Visualisierungseinheit (1) zur Eingabe beziehungsweise Wahl von für die Bearbeitung eines spezifischen Werkstückes notwendigen Funktionsdaten (10) und die Maschinenbetriebsart definierende Steuerdaten (11),
einer Maschinenkontroll-Einheit (2) zur Steuerung der CNC-Werkzeugmaschine und
einer NC-Steuereinheit (3) mit mindestens einem gespeicherten NC-Programm zur Generierung von Bewegungsbefehlen für die CNC-Maschine,
**dadurch gekennzeichnet,**
**dass** das mindestens eine NC-Programm eine Baumstruktur aufweist, welche von mehreren, Teilprogramme darstellenden Funktionsmodulen (35) gebildet sind,
**dass** jedes Funktionsmodul (35) mit einem Haltbefehl (H) versehen ist, welcher nach Massgabe von gewählten Funktionsdaten (11) mittels von der Maschinenkontroll-Einheit (2) übermittelbarer Steuercodes deaktivierbar ist,
**dass** jedes Funktionsmodul (35) unabhängig von seiner Lage in der Baumstruktur von der Maschinenkontroll-Einheit aufrufbar ist und
**dass** im NC-Programm zwischen den Funktionsmodulen (35) mindestens teilweise Uebergangsfunktionen (UF) vorhanden sind zur physischen Bereitstellung und/oder Datenbereitstellung der CNC-Werkzeugmaschine.

7. Steuerungssystem nach Anspruch 6, **dadurch gekennzeichnet, dass** die Funktionsmodule (35) eine identische Struktur aufweisen.

8. Steuerungssystem nach Anspruch 7, **dadurch gekennzeichnet, dass** der Haltbefehl (H) am Anfang des Funktionsmoduls (35) angeordnet ist und dass eine Schlaufe vom Ende des Funktionsmoduls (35) in den Haltbefehl (H) zurückführt.

9. Steuerungssystem nach Anspruch 6, **dadurch gekennzeichnet, dass** auf einem Ast der Baumstruktur mehrere Funktionsmodule (35) vorhanden sind.

10. Steuerungssystem nach Anspruch 6, **dadurch gekennzeichnet dass** die Funktionsdaten (10) in Kopien eines ersten Urfiles und die Steuerdaten (11) in Kopien eines zweiten Urfiles speicherbar sind.

11. Steuerungssystem nach Anspruch 10, **dadurch gekennzeichnet dass** die Ur-Files ASCII-Format aufweisen.

## Claims

1. A method for controlling a CNC machine tool which has cyclically recurring sequences, in particular of a gearwheel grinding machine, with a data input and visualisation unit (1), with a machine control unit (2) and with a NC control unit (3) with at least one stored NC control program for generating movement commands for the CNC machine,
wherein in the data input and visualisation unit (1) selected control data (11) defining machine modes are led further to the machine control unit (2), and
wherein function data (10) which is inputted into the data input and visualisation unit (1) or is selected in this, and which is necessary for the machining of a specific subject, is led from the data input and visualisation unit (1) to the NC control unit (3),
**characterised in that**
the machine control unit in accordance with selected control data (11) by way of control codes calls up function modules (35), of the NC control program, representing part programs, and independently of their hierarchical position in the NC control program leads them from one function module (35) to the next,
wherein by way of the control codes hold commands (H) present in each function module (35) are deactivated and wherein the machine control unit on changing from one function module (35) to the next takes into account transition functions (TF) for the physical preparation and/or data preparation of the CNC machine tool.

2. A method according to claim 1, **characterised in that** after processing the function module (35) one initialises the hold command (H) present at the beginning of each function module (35).

3. A method according to claim 2, **characterised in that** after processing the function module before initialising the hold command (H) a retro-machining function (FN) is processed.

4. A method according to claim 1, **characterised in that** in an activated function module (35) at least one further function module interconnected therein is called up.

5. A method according to claim 1, **characterised in that** the function data (10) is stored in the data input and visualisation unit (1) by copying a first primary file and the control data (11) by copying a second primary file.

6. A control system for a CNC machine tool which has cyclically recurring sequences, in particular for a gearwheel grinding machine,
with a data input and visualisation unit (1) for inputting or the selection of function data (10) necesssary for the machining of a specific subject and the control data (11) defining the machine mode,
with a machine control unit (2) for controlling the CNC machine tool and
with an NC control unit (3) with at least one stored NC program for generating movement commands for the CNC machine,
**characterised in that**
the at least one NC program comprises a tree structure which is formed by several function modules (35) representing part programs,
that each function module (35) is provided with a hold command (H) which in accordance with selected function data (11) is deactivatable by way of control codes transmittable from the machine control unit (2),
that each function module (35) independently of its position in the tree structure can be called up by the machine control unit and
that in the NC program between the function modules (35) there are present at least partly transition functions (TF) for the physical preparation and/or data preparation of the CNC machine tool.

7. A control system according to claim 6, **characterised in that** the function modules (35) have an identical structure.

8. A control system according to claim 7, **characterised in that** the hold command (H) is arranged at the beginning of the function module (35) and that a loop from the end of the function module (35) leads back into the hold command (H).

9. A control system according to claim 6, **characterised in that** on one branch of the tree structure there are present several function modules (35).

10. A control system according to claim 6, **characterised in that** the function data (10) can be stored in copies of a first primary file and the control data (11) in copies of a second primary file.

11. A control system according to claim 10, **characterised in that** the primary files have an ASCII format.

## Revendications

1. Procédé pour commander une machine-outil à CN, laquelle présente des processus qui se répètent de manière cyclique, notamment une machine à rectifier les roues dentées, comprenant une unité de saisie et de visualisation de données (1), une unité de contrôle de la machine (2) et une unité de commande de CN (3) dans laquelle est enregistré au moins un programme de commande de CN pour générer des instructions de déplacement à l'attention de la machine à CN, les données de commande (11) sélectionnées dans l'unité de saisie et de visualisation de données (1) et définissant les modes de fonctionnement de la machine étant transmises à l'unité de contrôle de machine (2), et les données de fonctionnement (10) saisies ou sélectionnées dans l'unité de saisie et de visualisation de données (1) et nécessaires pour l'usinage d'une pièce spécifique étant transmises de l'unité de saisie et de visualisation de données (1) à l'unité de commande de CN (3), **caractérisé en ce que** l'unité de contrôle de machine, d'après les indications des données de commande sélectionnées (11), invoque à l'aide de codes de commande des modules fonctionnels (35) du programme de commande de CN (30) qui représentent des programmes partiels et, indépendamment de leur position hiérarchique dans le programme de commande de CN, passe d'un module fonctionnel (35) au suivant, les instructions d'arrêt (H) présentes dans chaque module fonctionnel (35) étant désactivées au moyen des codes de commande et l'unité de contrôle de machine, lors du passage d'un module fonctionnel (35) au suivant, tenant compte d'au moins une fonction de transfert (UF) pour la préparation physique et/ou la préparation des données de la machine-outil à CN.

2. Procédé selon la revendication 1, **caractérisé en ce que** l'instruction d'arrêt (H) présente au début de chaque module fonctionnel (35) est rejointe après le traitement du module fonctionnel (35).

3. Procédé selon la revendication 2, **caractérisé en ce qu'**une fonction de traitement postérieur (FN) est exécutée après le traitement du module fonctionnel et avant de rejoindre l'instruction d'arrêt (H).

4. Procédé selon la revendication 1, **caractérisé en ce que** dans un module fonctionnel activé (35) est invoqué au moins un module fonctionnel supplémentaire imbriqué dans celui-ci.

5. Procédé selon la revendication 1, **caractérisé en ce que** les données de fonctionnement (10) sont enregistrées dans l'unité de saisie et de visualisation de données (1) en copiant un premier fichier d'amorce et les données de commande (11) en copiant un deuxième fichier d'amorce.

6. Système de commande pour une machine-outil à CN, laquelle présente des processus qui se répètent de manière cyclique, notamment une machine à rectifier les roues dentées, comprenant une unité de saisie et de visualisation de données (1) pour saisir ou sélectionner les données de fonctionnement (10) nécessaires pour l'usinage d'une pièce spécifique et les données de commande (11) qui définissent le mode de fonctionnement de la machine, une unité de contrôle de la machine (2) pour commander la machine-outil à CN et une unité de commande de CN (3) dans laquelle est enregistré au moins un programme de CN pour générer des instructions de déplacement à l'attention de la machine à CN, **caractérisé en ce que** l'au moins un programme de CN présente une arborescence qui est constituée de plusieurs modules fonctionnels (35) représentant des programmes partiels, que chaque module fonctionnel (35) est muni d'une instruction d'arrêt (H) qui peut être désactivée au moyen des codes de commande transmissibles par l'unité de contrôle de machine (2) d'après les indications des données de fonctionnement (11) sélectionnées, que chaque module fonctionnel (35) peut être invoqué par l'unité de contrôle de machine indépendamment de sa position dans l'arborescence et qu'il existe dans le programme de CN des fonctions de transfert (UF) au moins en partie entre les modules fonctionnels (35) pour la préparation physique et/ou la préparation des données de la machine-outil à CN.

7. Système de commande selon la revendication 6, **caractérisé en ce que** les modules fonctionnels (35) présentent une structure identique.

8. Système de commande selon la revendication 7, **caractérisé en ce que** l'instruction d'arrêt (H) est disposée au début du module fonctionnel (35) et qu'une boucle ramène de la fin du module fonctionnel (35) à l'instruction d'arrêt (H).

9. Système de commande selon la revendication 6, **caractérisé en ce que** plusieurs modules fonctionnels (35) sont présents sur une branche de l'arborescence.

10. Système de commande selon la revendication 6, **caractérisé en ce que** les données de fonctionnement (10) peuvent être enregistrées dans des copies d'un premier fichier d'amorce et les données de commande (11) dans des copies d'un deuxième fichier d'amorce.

11. Système de commande selon la revendication 10, **caractérisé en ce que** les fichiers d'amorce sont au format ASCII.
